# EUROPÄISCHE PATENTSCHRIFT

(11) **EP 3 297 806 B1**
(45) Veröffentlichungstag und Bekanntmachung des Hinweises auf die Patenterteilung: **18.03.2020**
(21) Anmeldenummer: 16763286.8
(22) Anmeldetag: 12.09.2016
(51) Int. Cl.: B29C 49/48, B29C 49/06, B29C 49/36

(54) **VORRICHTUNG UND VERFAHREN ZUR DURCHFÜHRUNG EINES UMSTELLVORGANGES BEI EINER GETRÄNKEHERSTELLUNGSANLAGE**
DEVICE AND METHOD FOR CARRYING OUT A REPOSITIONING PROCESS FOR A BEVERAGE PRODUCTION SYSTEM
DISPOSITIF ET PROCÉDÉ PERMETTANT DE METTRE EN OEUVRE UNE PROCÉDURE DE RENVERSEMENT DE MARCHE DANS UNE INSTALLATION DE FABRICATION DE BOISSONS

(30) Priorität: 23.09.2015 DE 102015116037
(43) Veröffentlichungstag der Anmeldung: 28.03.2018
(73) Patentinhaber: Krones AG, 93073 Neutraubling (DE)
(72) Erfinder: HAHN, Wolfgang, 93073 Neutraubling (DE)
(74) Vertreter: Bittner, Bernhard
(86) Internationale Anmeldenummer: PCT/EP2016/071443
(87) Internationale Veröffentlichungsnummer: WO 2017/050599

(56) Entgegenhaltungen:
- DE-A1-102009 040 977
- DE-A1-102010 042 165
- DE-A1-102011 050 724
- DE-A1-102012 104 267
- US-A1- 2012 036 693

## Beschreibung

Die vorliegende Erfindung bezieht sich auf eine Vorrichtung und ein Verfahren zum Betreiben einer Vorrichtung zum Herstellen von Getränkebehältnissen. Insbesondere bezieht sich die vorliegende Erfindung auf Vorrichtungen und Verfahren zum Herstellen von heiß abgefüllten oder heiß abzufüllenden Flüssigkeiten und insbesondere Getränken. Aus dem Stand der Technik ist es bekannt, dass diverse Getränke, wie beispielsweise Eistee, heiß abgefüllt werden. Die Inbetriebnahme derartiger Maschinen ist im Stand der Technik relativ aufwendig. Die Dokumente DE10 2011 050724A1, US2012/036693A1, DE10 2012 104267A1, DE10 2009 040977A1 und DE10 2010 042165A1 beschreiben ähnliche Vorrichtungen und Verfahren aus dem Stand der Technik.

Hierbei ist zu berücksichtigen, dass bei den hier beschriebenen Anwendungen zunächst Kunststoffflaschen erzeugt werden, beispielsweise mittels einer Streckblasmaschine, und diese anschließend mit einem erwärmten Getränk befüllt werden. Zu diesem Zwecke müssen beim Anfahren der Anlage sehr viele Anlagenteile getrennt behandelt werden. So müssen beispielsweise die Blasformen der Blasformmaschine temperiert bzw. erwärmt werden, weiterhin muss eine Kurzzeiterhitzung (im Folgenden KZE) erwärmt werden und auch der Füller bzw. die Fülleinrichtung selbst müssen erwärmt werden, um die Heißabfüllung des Getränkes zu ermöglichen.

Im Stand der Technik muss dabei der Maschinenbenutzer nach oder während des Rüstens der Anlage bzw. des Blockes zunächst das Aufheizen der Blasformen starten, weiterhin die Kurzzeiterhitzung auslösen und weiterhin die Fülleinrichtung aufheizen und schließlich rechtzeitig das Heizen des Ofens zum Erwärmen von Kunststoffvorformlingen starten. Damit hängt der Startablauf auch von dem jeweiligen Bediener ab. Er muss gleichzeitig Vorgänge auslösen, um den optimalen Ablauf zu gewährleisten. Erfolgt ein Vorgang zu spät, wird Zeit verloren, so dass sich eine geringere OEE (overall equipment effectiveness) ergibt. Erfolgt ein Vorgang zu früh, geht Energie verloren und es ergeben sich höhere Energiekosten.

Der vorliegenden Erfindung liegt daher die Aufgabe zugrunde, derartige Behältnisherstellungsverfahren und Vorrichtungen effektiver zu gestalten, insbesondere bei einem Anlaufen derselben. Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Die Erfindung ist daher gerichtet auf ein Verfahren zum Durchführen eines Umstellvorganges bei einer Vorrichtung zum Herstellen von Getränkebehältnissen, wobei diese Vorrichtung in einem Arbeitsbetrieb (d.h. insbesondere einem Produktionsbetrieb, der insbesondere der Herstellung von (bevorzugt mit Getränken) befüllten Behältnissen dient) Kunststoffbehältnisse mittels einer Umformungseinrichtung aus Kunststoffvorformlingen erzeugt und diese erzeugten Kunststoffbehältnisse zu einer Fülleinrichtung transportiert werden und die Behältnisse mit einer Flüssigkeit und insbesondere einem Getränk befüllt werden, wobei die Flüssigkeit mit einer Temperatur in das Behältnis eingefüllt wird, die über 50° Celsius liegt. Bevorzugt liegt diese Temperatur über 55°C, bevorzugt über 60°C, bevorzugt über 65°C und besonders bevorzugt über 70°C.

Erfindungsgemäß stehen die Umformungseinrichtung und die Fülleinrichtung wenigstens zeitweise in Datenkommunikation und zur Durchführung des Umstellvorganges von wenigstens der Umformungseinrichtung oder der Fülleinrichtung wird ein Wert ausgegeben und/oder verwendet, der für einen Umstellungsstatus dieser Umformungseinrichtung und/oder dieser Fülleinrichtung charakteristisch ist.

Dabei ist es möglich, dass die Umformungseinrichtung und die Fülleinrichtung und/oder deren Steuerungseinrichtungen unmittelbar miteinander in Datenkommunikation stehen. Es wäre jedoch auch denkbar, dass die Umformungseinrichtung und die Fülleinrichtung über eine übergeordnete Steuerungseinrichtung bzw. Maschinensteuerung miteinander in Datenkommunikation stehen. Auch weitere Einrichtungen einer entsprechenden Anlage, wie etwa eine Kurzzeiterhitzungseinrichtung oder eine Erwärmungseinrichtung zum Erwärmen von Kunststoffvorformlingen (bzw. deren Steuerungseinrichtung) können in einer entsprechenden Datenkommunikation mit der Fülleinrichtung und/oder der Umformungseinrichtung stehen. Unter einer Datenkommunikation wird eine Kommunikationsverbindung verstanden, über welche Daten, wie etwa für Zeiten oder Temperaturen charakteristische Daten ausgetauscht werden können.

Es wird daher erfindungsgemäß vorgeschlagen, dass die besagten Anlageteile, wie etwa eine Fülleinrichtung oder die Umformungseinrichtung, miteinander kommunizieren, wobei es auch möglich ist, dass diese besagten Anlagenteile mit einer (übergeordneten) Steuerungseinrichtung kommunizieren.

Bevorzugt weist die Umformungseinrichtung eine Steuerungseinrichtung zu deren Steuerung auf. Bevorzugt weist auch die Fülleinrichtung eine Steuerungseinrichtung zu deren Steuerung auf. Bevorzugt kommunizieren diese Steuerungseinrichtungen miteinander.

Vorteilhaft handelt es sich bei den hier dargestellten Maschinen, d.h. insbesondere der Umformungseinrichtung und der Fülleinrichtung aber auch vorteilhaft bei weiteren Maschinen wie etwa einer Kurzzeiterhitzungseinrichtung um miteinander synchronisierte Maschinen bzw. Maschinen, die als Block betrieben werden. Unter einer Synchronisation wird hier insbesondere eine Synchronisation hinsichtlich Arbeitsgeschwindigkeit verstanden. Damit kann beispielsweise eine Maschine eine bestimmte Produktionsgeschwindigkeit vorgeben und die anderen Maschinen folgen dieser. Damit ändern sich bei einer Änderung der Arbeitsgeschwindigkeit einer dieser Maschinen auf die jeweiligen Arbeitsgeschwindigkeiten der anderen Maschinen. So könnte eine übergeordnete Steuerungseinrichtung vorhanden sein, welche die Arbeitsgeschwindigkeiten der einzelnen Maschinen einheitlich ändert. Weiterhin wäre es denkbar, dass Pufferungseinrichtungen zwischen einzelnen Maschinen vorgesehen sind, welche ein Puffern von Behältnissen ermöglichen, etwas ein Puffern von geblasenen aber noch nicht befüllten Behältnissen.

Weiterhin erfolgt bevorzugt ein Umstellvorgang zumindest teilweise automatisiert, wobei dies bevorzugt durch einen direkten Datenaustausch zwischen der Umformungseinrichtung, der Fülleinrichtung und gegebenenfalls weiteren Einrichtungen erfolgen kann. Bei einem weiteren bevorzugten Verfahren werden Daten ausgegeben, wie etwa die Zeitdauer einer Erwärmung oder eine Temperatur von bestimmten Elementen der Umformungseinrichtung oder der Fülleinrichtung, wie etwa von einem abzufüllenden Getränk oder Blasformelementen.

Diese Daten werden wiederum für die Umrüstung bzw. Umstellung zugrunde gelegt. Unter einem Umstellvorgang wird im Folgenden insbesondere ein Wechsel einer Getränkesorte, ein Wechsel von Behältnissen oder dergleichen verstanden. Insbesondere handelt es sich bei dem Umstellvorgang um einen Vorgang, der ein Wechseln wenigstens eines Elementes erfordert, beispielsweise ein Wechseln von Blasformen, von Füllelementen oder dergleichen. Falls beispielsweise Blasformen ausgewechselt werden müssen, ist es erforderlich, die neu umgerüsteten bzw. montierten Blasformen wieder auf eine Betriebstemperatur zu erwärmen.

Unter einem Wert, der für den Umstellvorgang charakteristisch ist, wird, wie unten noch genauer erläutert, ein Wert verstanden, der diesen spezifischen Umstellungsvorgang charakterisiert. Dabei handelt es sich insbesondere um eine sich mit der Zeit ändernden Wert oder um einen Zeitwert, etwa eine Zeitspanne, für welche eine gewisse Erwärmung bereits andauert oder um einen Eingabewert, der den Abschluss eines Umstellungsvorgangs charakterisiert.

Bevorzugt erfolgt das Verfahren in mehreren Schritten, wobei bevorzugt in Abkühlungs- oder Erwärmungszeiten bestimmter Anlagenteile andere Rüstvorgänge (an anderen Anlagenteilen) vorgenommen werden. So wäre es beispielsweise möglich, dass während eines Abkühlens der einzuwechselnden Blasformen bereits zeitgleich Umstellungsvorgänge an einem Ofen zum Erwärmen von Kunststoffvorformlingen vorgenommen werden.

Die Erfindung wurde hier konkret unter Bezugnahme auf Heißabfüllvorgänge beschrieben, es wird jedoch darauf hingewiesen, dass die Erfindung auch bei anderen Maschinengattunten und/oder anderen Zusammenstellungen von Maschinen Anwendung finden kann, etwa bei einer Anlage, die eine Reinigungsmaschine zum Reinigen von Glasflaschen und eine sich hieran anschließende Fülleinrichtung zum Befüllen von Glasflaschen aufweist.

Bei einem weiteren bevorzugten Verfahren wird im Rahmen eines Umstellungsvorganges auch wenigstens an der Umformungseinrichtung und/oder der Fülleinrichtung ein Umrüstvorgang durchgeführt, bei dem wenigstens ein Element dieser Umformungseinrichtung oder der Fülleinrichtung gewechselt wird. So kann es sich beispielsweise bei diesem Umrüstvorgang um einen Vorgang handeln, bei dem Blasformen gegen andere Blasformen (zur Erzeugung anderer Behältnisse) ausgetauscht werden. Dieser Umrüstvorgang kann dabei manuell durch einen Benutzer oder auch automatisch (insbesondere auch unter Verwendung von Robotern) erfolgen.

Bei einem weiteren bevorzugten Verfahren wird bei dem Umstellungsvorgang auch wenigstens ein Parameter berücksichtigt, der für die Umrüstung charakteristisch ist. So ist es beispielsweise möglich und bevorzugt, dass ein Benutzer in das System eine Rückmeldung über ausgeführte Rüstarbeiten eingibt. So ist es beispielsweise möglich, dass der Benutzer bestätigt, dass ein bestimmter Umrüstvorgang, etwa der Wechsel einer Blasform (bzw. mehreren oder aller Blasformen) oder eines Teils einer Blasform, etwa deren Seitenteile, durchgeführt wurde. Dies bedeutet für das System die Anweisung, dass nunmehr beispielsweise mit der Erwärmung dieser Blasformen begonnen werden kann. Damit handelt es sich bevorzugt bei dem für den Umrüstvorgang charakteristischen Wert um einen Wert, der für eine Beendigung des betreffenden Umrüstvorgangs charakteristisch ist.

Durch die hier beschriebenen Vorgehensweisen kann die OEE durch eine kürzere Umrüstzeit insbesondere an einer Blockmaschine erhöht werden. Auch erfolgt durch einen stärker automatisierten Ablauf eine Energieeinsparung. Beispielsweise muss keine Komponente der Anlage warten und unnötig heizen.

Bei einem weiteren bevorzugten Verfahren wird an der Umformungseinrichtung ein Umrüstvorgang von einem ersten Satz an Blasformen auf einen zweiten Satz an Blasformen durchgeführt und wenigstens ein für diesen Umrüstvorgang charakteristischer Wert wird für den Umstellvorgang verwendet. Insbesondere kann es sich dabei - wie erwähnt - um eine Bestätigung handeln, dass der besagte Umrüstvorgang durchgeführt wurde. Im Folgenden wird unter einem Umrüstvorgang insbesondere der Austausch eines von der Maschine benötigten Elementes verstanden, insbesondere der Austausch eines Satzes insbesondere gleichartiger Elementen, wie eben - wie oben erwähnt - gleichartiger Blasformen durch andere Blasformen zur Herstellung anderer Behältnisse. Besonders bevorzugt wird daher das erfindungsgemäße Verfahren angewandt auf Umstellungsverfahren, welche auch Umrüstvorgänge beinhalten.

Bei einem weiteren bevorzugten Verfahren wird für den Umstellvorgang wenigstens ein Element der Umformungseinrichtung und/oder wenigstens ein Element der Fülleinrichtung erwärmt. Insbesondere wird sowohl wenigstens ein Element der Umformungseinrichtung als auch ein Element der Fülleinrichtung erwärmt. Bei dem Element der Umformungseinrichtung kann es sich insbesondere um Blasformen oder deren Komponenten handeln. Bei dem Element der Fülleinrichtung kann es sich beispielsweise um einen Aufnahmetank zur Aufnahme von abzufüllenden Getränken handeln. Daneben können auch Flüssigkeitsleitungen, die zum Fördern der abzufüllenden Flüssigkeit dienen, erwärmt werden.

Bei einem weiteren bevorzugten Verfahren werden eine Erhitzung des Getränkes und insbesondere eine Kurzzeiterhitzung des Getränkes vorgenommen. Bevorzugt wird im Rahmen eines Umstellungsvorgangs auch wenigstens ein Parameter der Kurzzeiterhitzungseinrichtung verändert und/oder wenigstens ein Element der Kurzzeiterhitzungseinrichtung gewechselt.

Bei einem weiteren bevorzugten Verfahren wird im Rahmen des Herstellungsvorganges wenigstens ein Behältnis sterilisiert. Dabei ist es möglich, dass bereits die Kunststoffvorformlinge sterilisiert werden, bevor sie zu den Kunststoffbehältnissen umgeformt werden. Auch wäre es möglich, dass die Kunststoffbehältnisse sterilisiert werden. Dabei wäre es möglich, dass die Kunststoffvorformlinge sterilisiert werden, bevor sie zu den Kunststoffbehältnissen umgeformt werden.

Bei einem weiteren bevorzugten Verfahren wird das Behältnis nach dem Befüllen gekühlt. Dabei kann diese Kühlung durch eine Beaufschlagung des Behältnisses mit einem fließfähigen Medium erfolgen. Bei einem weiteren bevorzugten Verfahren wird im Arbeitsbetrieb das Behältnis unmittelbar nach dem Füllen verschlossen.

Bevorzugt findet in einem Verfahrensablauf für eine Umstellung einer entsprechenden Maschine zunächst ein Aufheizen der Blasformen der Blasmaschine statt und dies bevorzugt unmittelbar nach dem Rüsten der Blasmaschine. Bevorzugt wird zunächst mit dem Erwärmen dieser Blasformen begonnen, da dies die längste Zeit in Anspruch nimmt. So ist es möglich, dass bei einem Start der Erwärmung der Blasformen eine Zeit gesetzt wird und rückwärts läuft, beispielsweise 34 Minuten. Hierbei handelt es sich um die angenommene längste Zeit, die zu einem Aufheizen der Blasformen benötigt wird. Bevorzugt ist jedoch diese Zeit individuell einstellbar.

In einem weiteren Verfahrensschritt wird ein Heizmodul der Blasmaschine (d.h. der Umformungseinrichtung) erwärmt. Dabei handelt es sich insbesondere um den Ofen, der die Kunststoffvorformlinge auf eine Temperatur erwärmt, welche für den Umformungsvorgang, beispielsweise einen Blasformvorgang, nötig ist. Dies kann beispielsweise eine bestimmte Zeitspanne vor der Inbetriebnahme der Anlage, beispielsweise 5 Minuten vor Inbetriebnahme erfolgen, wenn die Erwärmungseinrichtung 5 Minuten benötigt, um auf Betriebstemperatur zu gelangen. In einem weiteren Verfahrensschritt wird die oben erwähnte Kurzzeiterhitzung gestartet. Für die Kurzzeiterhitzung wird üblicherweise ein längerer Zeitraum, beispielsweise ca. 30 Minuten, benötigt. So kann beispielsweise bei einem Rückwärtslaufen der Uhr festgestellt werden, ab wann mit dem Aufheizen dieses Moduls begonnen wird.

Allgemein wird bevorzugt die Erwärmung wenigstens einer Behandlungseinrichtung automatisch gesteuert bzw. begonnen. Insbesondere wird die Erwärmung wenigstens eines Moduls der Maschine in Abhängigkeit von einer zeitlichen Größe, insbesondere in Abhängigkeit von einer bereits laufenden Erwärmungszeit eines anderen Aggregats gesteuert. So kann beispielsweise hinterlegt werden, dass eine Aufheizung einer Kurzzeiterhitzung eine vorgegebene Zeitspanne nach dem Beginn der Erwärmung der Umformungseinrichtung erfolgt, beispielsweise 10 Minuten nach dem Beginn der Blasformerwärmung.

Bevorzugt werden die Erwärmungen mehrerer Behandlungseinrichtungen automatisch gesteuert und insbesondere automatisch in Abhängigkeit von Zeitabläufen gesteuert.

Bei einem bevorzugten Verfahren wird - wie oben erwähnt - mit dem Beginn der Erwärmung einer Einrichtung, etwa der Umformungseinrichtung, ein Zeitablauf in Gang gesetzt und zu vorgegebenen Zeitpunkten innerhalb dieses Zeitablaufes werden weitere Erwärmungsschritte automatisiert eingeleitet, wie etwa eine Erwärmung der Fülleinrichtung und/oder eine Erwärmung der Kurzzeiterhitzung. Bevorzugt ist damit eine Zeitsteuerung für die Initiierung der Erwärmungsvorgänge der einzelnen Behandlungseinrichtungen vorgesehen.

In einem weiteren bevorzugten Verfahren werden auch das Aufheizen der Fülleinrichtung und/oder ein Start der Inbetriebnahme der Fülleinrichtung bei einer vorgegebenen Zeit begonnen. Schließlich wird damit begonnen, das Produkt, d.h. die Behältnisse und/oder das Getränk in die Fülleinrichtung einzufahren.

Bevorzugt sind die Umformungseinrichtung, die Fülleinrichtung und die Kurzzeiterhitzungseinrichtung im Wesentlichen zeitgleich (zu einem vorgegebenen Zeitpunkt oder Zeitraum) produktionsbereit und bevorzugt sind auch die übrigen Rüstvorgänge an der gesamten Anlage zu diesem Zeitpunkt erledigt. Vorteilhaft werden jedoch die einzelnen Rüstvorgänge abgefragt, d.h. es kann eine Bestätigung eingegeben werden, aus der sich ergibt, dass entsprechende Rüstvorgänge durchgeführt wurden. Dabei ist es jedoch auch möglich, dass diese Umrüstvorgänge nicht von einem Benutzer, sondern von Robotern durchgeführt werden. Bei einem weiteren Verfahren wird nach der Durchführung der Umstellung, Aufheizung und Rüstvorgänge ein Testlauf initiiert. Dieser Testlauf kann dabei automatisch gestartet werden.

Bei einem weiteren bevorzugten Verfahren ist der für den Umstellungsstatus der Umformungseinrichtung charakteristische Wert ein Zeitwert oder ein für eine Temperatur wenigstens eines Elementes der Umformungseinrichtung oder der Fülleinrichtung charakteristischer Wert. Bei dem Umstellungsstatus handelt es sich bevorzugt um einen zeitabhängigen Status und/oder einen temperaturabhängigen Status d.h. den Status, den eine bestimmte Behandlungseinrichtung, wie die Umformungseinrichtung oder die Fülleinrichtung oder die Kurzzeiterhitzungseinrichtung zu einer bestimmten Zeit aufweist, beispielsweise die Temperaturen von Elementen dieser jeweiligen Vorrichtungen.

Bei einem weiteren bevorzugten Verfahren werden im Rahmen des Umstellvorganges wenigstens ein Element der Umformungseinrichtung und wenigstens ein Element der Fülleinrichtung erwärmt, wobei die Erwärmung des Elementes der Umformungseinrichtung zu einer anderen und insbesondere früheren Zeit begonnen wird, als die Erwärmung des Elementes der Fülleinrichtung. Bevorzugt wird auch wenigstens ein Element der Kurzzeiterhitzungseinrichtung erwärmt. Vorteilhaft wird dieses Element der Kurzzeiterhitzungseinrichtung nach der Erwärmung des Elementes der Umformungseinrichtung begonnen. Bevorzugt erfolgt die Erwärmung der Kurzzeiterhitzungseinrichtung vor dem Beginn der Erwärmung der Fülleinrichtung bzw. deren Elementes.

Bei einem weiteren bevorzugten Verfahren wird der Zeitpunkt für den Beginn der Erwärmung des Elementes der Fülleinrichtung in Abhängigkeit von einem Zeitpunkt für den Beginn der Erwärmung des Elementes der Umformungseinrichtung bestimmt. Wie oben erwähnt, ist bekannt, wie lange die einzelnen Erwärmungen dauern. Daher werden für die jeweiligen Zeiträume und/oder Zeitpunkte, zu denen mit der Erwärmung begonnen wird, charakteristische Daten ausgegeben. Auf diese Weise können bevorzugt die einzelnen Erwärmungen - bevorzugt automatisch - zugeschaltet werden. Dabei kann jeweils auch diejenige Zeit berücksichtigt werden, die für die einzelnen Erwärmungsvorgänge benötigt wird.

Bei einem weiteren bevorzugten Verfahren werden Temperaturen von Elementen der Umformungseinrichtung, der Fülleinrichtung oder der Kurzzeiterhitzungseinrichtung gemessen. Vorteilhaft werden auch diese gemessenen Werte bei dem Umstellungsvorgang berücksichtigt. So wäre es beispielsweise möglich, dass mit der Erwärmung einer bestimmten Maschine, etwa der Kurzzeiterhitzungseinrichtung erst begonnen wird, wenn die (bereits eingewechselten) Blasformen während ihrer Erwärmung eine bestimmte Temperatur erreicht haben. In diesem Fall wird nicht eine zeitabhängige sondern eine temperaturabhängige Steuerung vorgenommen. Auch ist eine Kombination aus diesen Vorgehensweisen denkbar.

Die vorliegende Erfindung ist weiterhin auf eine Vorrichtung zum Herstellen von Getränkebehältnissen gerichtet. Diese Vorrichtung weist eine Umformungseinrichtung auf, welche die Kunststoffvorformlinge zu Kunststoffbehältnissen umformt und eine Fülleinrichtung, welche die von der Umformungseinrichtung hergestellten Kunststoffbehältnisse mit einer Flüssigkeit und insbesondere einem Getränk befüllt. Dabei ist die Fülleinrichtung derart ausgestaltet, dass die die Flüssigkeit mit einer Temperatur in das Behältnis einfüllt, die über 50° C (bevorzugt über 55°C, 66°C, 65°C ,70°C liegt. Weiterhin weist die Vorrichtung eine Erhitzungseinrichtung und insbesondere eine Kurzzeiterhitzungseinrichtung auf, welche zum Erhitzen der in die Behältnisse einzufüllenden Flüssigkeit geeignet und bestimmt ist. Dabei ist es möglich, dass es sich bei dieser Kurzzeiterhitzungseinrichtung um eine Durchlauferhitzungseinrichtung handelt.

Erfindungsgemäß weist die Vorrichtung ein Zeitmanagementsystem und/oder Temperaturmanagementsystem auf, welches einen Produktionsbeginn der Vorrichtung unter Berücksichtigung von Erwärmungszeiten der Umformungseinrichtung und/oder der Fülleinrichtung (bzw. von Elementen dieser Einrichtungen etwa der Blasformen) steuert. Bevorzugt steuert das Zeitmanagementsystem einen Produktionsbeginn der Vorrichtung auch unter Berücksichtigung von Erwärmungszeiten der Kurzzeiterhitzungseinrichtung. Neben dem hier genauer beschriebenen Zeitmanagementsystem kann jedoch auch ein Temperaturmanagementsystem Anwendung finden, welches einen Produktionsbeginn der Vorrichtung unter Berücksichtigung von Erwärmungstemperaturen der Umformungseinrichtung und/oder der Fülleinrichtung (bzw. von Elementen dieser Einrichtungen etwa der Blasformen) steuert.

Bevorzugt handelt es sich bei der Umformungseinrichtung um eine Blasformmaschine und insbesondere eine Streckblasmaschine.

Bei einer weiteren vorteilhaften Ausführungsform sind Erwärmungseinrichtungen vorgesehen, um Elemente der Umformungseinrichtung und/oder der Fülleinrichtung zu erwärmen. So können beispielsweise Blasformen oder Halterungen der Blasformen der Umformungseinrichtung Flüssigkeitskanäle aufweisen, durch welche ein Temperiermedium fließt. Mittels dieser Kanäle kann eine Erwärmung der Blasformen erfolgen.

Bei einer weiteren vorteilhaften Ausführungsform ist dem Zeitmanagementsystem ein für einen Umrüstvorgang charakteristischer Wert zuführbar. So weist bevorzugt das Zeitmanagement ein Eingabemittel auf, wie etwa einen Tastschalter oder einen Touchscreen, über welchen der Benutzer bestätigen kann, dass er einen bestimmten Umrüstvorgang durchgeführt hat.

Damit kann beispielsweise eine Eingabe durch den Benutzer oder automatisch erfolgen, in der bestätigt wird, dass eine bestimmte Umrüstung, etwa ein Auswechseln von Blasformen, durchgeführt wurde. Diese besagte Eingabe kann dabei manuell erfolgen oder etwa auch über eine Eingabebestätigung, über einen Roboter oder dergleichen.

Bei einer weiteren vorteilhaften Ausführungsform weist die Vorrichtung eine Transporteinrichtung zum Transportieren der Kunststoffvorformlinge auf. Diese Transporteinrichtung kann beispielsweise die Kunststoffvorformlinge oder Kunststoffbehältnisse zwischen den einzelnen Behandlungseinrichtungen, d.h. etwa der Umformungseinrichtung und der Fülleinrichtung transportieren. Daneben können Leitungen vorgesehen sehen sein, welch eine abzufüllende Flüssigkeit von der Kurzzeiterhitzungseinrichtung zu der Fülleinrichtung fördern.

Bei einer weiteren vorteilhaften Ausführungsform weist die Vorrichtung, insbesondere das Zeitmanagementsystem eine Eingabeeinrichtung auf, über welche ein Benutzer dem Zeitmanagementsystem eine Information und insbesondere eine Information über einen Umrüstvorgang zuführen kann. Bei einer weiteren vorteilhaften Ausführungsform weist die Vorrichtung eine Erwärmungseinrichtung zum Erwärmen von Kunststoffvorformlingen auf. Diese Erwärmungseinrichtung ist besonders bevorzugt der Umformungseinrichtung vorgeschaltet.

Bei einer weiteren vorteilhaften Ausführungsform ist das Zeitmanagementsystem dazu geeignet und bestimmt, einen Erwärmungsvorgang wenigstens eines Elementes der Vorrichtung automatisch einzuleiten. Vorteilhaft ist das Zeitmanagement dazu in der Lage, diesen Erwärmungsvorgang in Abhängigkeit von einer zeitlichen Größe und/oder einer Temperatur, beispielweise in Abhängigkeit von einem bereits an einem anderen Element durchgeführten Erwärmungsvorgang durchzuführen. Allgemein ist das Zeitmanagementsystem (oder das Temperaturmanagementsystem dazu geeignet und bestimmt, Erwärmungseinrichtungen für die Umformungseinrichtung und/oder die Fülleinrichtung und/oder die Kurzzeiterhitzungseinrichtung anzusteuern um so eine Erwärmung dieser Einrichtungen oder bestimmter Elemente dieser Einrichtungen zu bewirken. Insbesondere ist dabei dieses Zeitmanagementsystem in der Lage, die Erwärmungen der genannten Einrichtungen aufeinander abzustimmen.

Vorteilhaft handelt es sich bei dem zu erwärmenden Element um ein Element der Kurzzeiteinrichtung, der Fülleinrichtung oder der Erwärmungseinrichtung zum Erwärmen der Kunststoffvorformlinge. So kann beispielsweise ein Element einer Durchlauferhitzungseinrichtung zum Erwärmen der abzufüllenden Flüssigkeit erwärmt werden.

Bei einer weiteren vorteilhaften Ausführungsform weist die Vorrichtung eine Anzeigevorrichtung auf, welche zur Ausgabe von Daten geeignet und bestimmt ist, welche für eine Erwärmung wenigstens eines Elementes der Vorrichtung charakteristisch ist. Insbesondere handelt es sich dabei um eine Erwärmungszeit und/oder eine bereits abgelaufene Erwärmungszeit. Besonders bevorzugt handelt es sich bei den Daten auch um eine Temperatur, insbesondere eine Momentantemperatur des zu erwärmenden Produktes.

Bei einer weiteren vorteilhaften Ausführungsform weist die Anzeigeeinrichtung auch eine Zeitanzeige auf und insbesondere eine rückwärts laufende Zeit bzw. einen sogenannten Countdown.

Weitere Vorteile und Ausführungsformen ergeben sich aus den beigefügten Zeichnungen:
Darin zeigen:
- Fig. 1: eine schematische Darstellung einer erfindungsgemäßen Vorrichtung zum Behandeln von Behältnissen und/oder Getränken;
- Fig. 2: ein Ablaufdiagramm für einen Sortenwechsel bei einer erfindungsgemäßen Anlage;
- Fig. 3: eine mögliche Anzeige bei einem Ablauf einer Produktumstellung; und
- Fig. 4: ein Beispiel für einen zeitlichen Ablauf einer Produktumstellung.

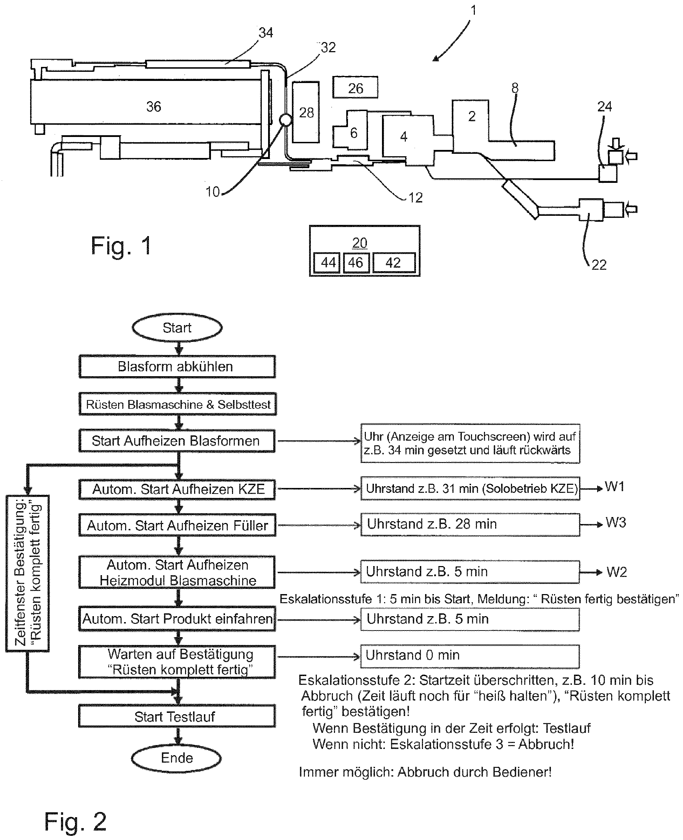

Figur 1 zeigt eine ausschnittsweise schematische Darstellung einer erfindungsgemäßen Vorrichtung zum Herstellen von Getränkebehältnissen 10. Diese Vorrichtung weist hier eine Umformungseinrichtung 2 auf, beispielsweise eine Streckblasmaschine, welche Kunststoffvorformlinge zu Kunststoffbehältnissen umformt. Das Bezugszeichen 8 bezieht sich auf eine Erwärmungseinrichtung, welche zum Erwärmen der Kunststoffvorformlinge dient, welche der Umformungseinrichtung 2 zugeführt werden. Das Bezugszeichen 22 bezieht sich auf einen Vorrat an Kunststoffvorformlingen, der der Erwärmungseinrichtung 8 und der Umformungseinrichtung 2 zugeführt wird. Es wäre jedoch auch möglich, dass bereits hergestellte Kunststoffbehältnisse oder auch Glasbehältnisse direkt der Fülleinrichtung zugeführt werden. Das Bezugszeichen 24 bezieht sich auf einen Vorrat von bereits hergestellten Behältnissen (ggfs. auch Glasbehältnissen). Falls fertiggestellte Behältnisse zugeführt werden, kann auf eine Umformungseinrichtung 2 auch verzichtet werden. Die Anmelderin behält sich vor, auch für eine derartige Ausgestaltung Schutz zu beanspruchen.

Das Bezugszeichen 4 kennzeichnet grob schematisch eine Fülleinrichtung, welche die von der Umformungseinrichtung 2 hergestellten Behältnisse befüllt. Dabei kennzeichnet das Bezugszeichen 6 eine Kurzzeiterhitzungseinrichtung (KZE), welche die abzufüllende Flüssigkeit kurzzeitig erhitzt. Dabei ist es möglich, dass diese Kurzzeiterhitzungseinrichtung zwischen einem Sammelreservoir für die Flüssigkeit und der Fülleinrichtung 4 angeordnet ist und beispielsweise in der Art eines Durchlauferhitzers die Flüssigkeit bzw. das Getränk erhitzt.

Das Bezugszeichen 12 kennzeichnet grob schematisch einen Verschließer, der die befüllten Behältnisse verschließt. Diese so befüllten Behältnisse werden über eine Transporteinrichtung 32 und eine weitere Transportstrecke 34 zu einer Kühleinrichtung 36, wie einem Rücckühler, geführt.

Das Bezugszeichen 20 kennzeichnet ein Zeitmanagementsystem, welches zur Steuerung, insbesondere zur zeitlichen Steuerung der Umformungseinrichtung 2, der Fülleinrichtung 4 und der Kurzzeiterhitzungseinrichtung 6, sowie auch des Preform-Ofens 8 dient. Dieses Zeitmanagementsystem 20 weist dabei insbesondere eine Bildausgabeeinrichtung 42 auf, mittels derer Zeitabläufe visualisiert werden können. Als Bildausgabeeinrichtung kann z.B. auch der Touchscreen vom Füller dienen. Daneben können auch Eingabeelemente 44, 46 vorgesehen sein, über welche der Benutzer Bedienungsschritte eingeben kann, wie etwa eine Bestätigung, dass die Blasformen gewechselt wurden. Als Eingabeelement könnte z.B. auch der Touchscreen von der Blasmaschine dienen. Das Zeitmanagementsystem 20 kann die Erwärmungen von einzelnen Komponenten der Umformungseinrichtung 2, der Fülleinrichtung 4 und der Kurzzeiterhitzungseinrichtung 6 steuern. Dabei kann das Zeitmanagementsystem insbesondere auch bereits durchgeführte Erwärmungszeiten bzw. absolvierte Erwärmungszeiten berücksichtigen.

Figur 2 zeigt einen schematischen Ablauf für ein erfindungsgemäßes Inbetriebnahmeverfahren. Dabei wird zunächst ein Systemwechsel initiiert. Anschließend werden die auszuwechselnden Blasformen abgekühlt, was sowohl aktiv durch eine Kühlflüssigkeit erfolgen kann, als auch passiv durch Stehenlassen der jeweiligen Blasformen in der Maschine. In einem weiteren Verfahrensschritt wird die Umformungseinrichtung bzw. Blasmaschine gerüstet und es wird bevorzugt auch ein Selbsttest ausgeführt. Im Rahmen dieses Rüstvorganges werden die bisherigen Blasformen durch neue Blasformen eingewechselt. In dem nächsten Verfahrensschritt wird das Aufheizen der Blasformen begonnen. Zu diesem Zeitpunkt wird über eine Anzeigeeinrichtung bzw. ein Display (insb. ein Touchscreen) eine Startzeit ausgegeben. Dabei kann es sich um eine absolute Zeitangabe handeln, wie etwa 15.30 Uhr, es wäre jedoch auch möglich, dass eine rückwärts zählende Zeit eingeblendet wird, wie hier beispielsweise 34 Minuten und ab diesem Zeitpunkt diese Zeit rückwärts läuft. Bei diesen genannten 34 Minuten handelt es sich hier um eine übliche Aufheizzeit für die Blasformen. Das Bezugszeichen W1 kennzeichnet den ausgegebenen oder verwendeten oder zu verwendenden Wert, der für den Umstellungsvorgang der Umformungseinrichtung charakteristisch ist. Hier wird als Wert W1 diejenige Zeitdauer ausgegeben bzw. verwendet, die für die Erwärmung der Blasformen nötig ist und/oder die Zeitspanne, über welche hinweg bereits erwärmt wurde. Damit kann es sich bei dem Wert W1 um einen Ausgangswert für einen Countdown oder einen laufenden Wert handeln. Daneben können jedoch auch Werte berücksichtigt werden, welche für eine Erwärmungsleistung charakteristisch sind.

Nach einer bestimmten Zeit, hier beispielsweise nach 3 Minuten, wird automatisch mit dem Aufheizen der Kurzzeiterhitzungseinrichtung 6 begonnen. Dies beruht darauf, dass zum Heizen der Kurzzeiterhitzungseinrichtung beispielsweise 31 Minuten benötigt werden und daher in den ersten 3 Minuten nach dem Start der Erwärmung der Blasformen ein Einsetzen der Heizung der Kurzzeiterhitzungseinrichtung nicht erforderlich bzw. ineffizient wäre. Bevorzugt wird auch dies wiederum auf dem Display angezeigt, beispielsweise durch einen Hinweis darauf, dass nunmehr mit der Erwärmung der Kurzzeiterhitzungseinrichtung begonnen wurde. Das Bezugszeichen W3 kennzeichnet entsprechend einen Wert, der für den Umstellungsvorgang der Kurzzeiterhitzungseinrichtung charakteristisch ist. Auch bei dem Wert W3 handelt es sich hier um einen Zeitwert.

Nach einem weiteren Zeitabschnitt, beispielsweise bei einem Uhrstand von 28 Minuten, wird (bevorzugt ebenfalls wieder automatisch) mit einem Beheizen der Fülleinrichtung begonnen. Auch hier kann wiederum berücksichtigt werden, dass für das Erwärmen des Füllers weniger Zeit nötig ist als für das Erwärmen der Kurzzeiterhitzungseinrichtung und der Blasformen. Schließlich wird, etwa bei einem Uhrstand von 5 Minuten, mit dem Erwärmen des Ofens begonnen, der die Kunststoffvorformlinge erwärmen soll. Entsprechend bezieht sich das Bezugszeichen W2 auf einen Wert, der für die Erwärmung der Fülleinrichtung charakteristisch ist. Auch hierbei handelt es sich um einen Zeitwert.

Diese Erwärmung dauert in der Regel eine wesentlich geringere Zeit, hier 5 Minuten, so dass auch hier Heizzeit eingespart werden kann. Optional wäre es auch möglich, dass zu einem weiteren Zeitpunkt automatisch damit begonnen wird, das Produkt in die Maschine einzufahren, d.h. einerseits die Kunststoffvorformlinge und gegebenenfalls auch andererseits die Flüssigkeit zuzuführen.

In einem weiteren Verfahrensschritt kann auf eine Bestätigung insbesondere eines Nutzers gewartet werden, in der bestätigt wird, dass der Umrüstvorgang (mechanisch) vollständig abgeschlossen ist. Ist dies der Fall, kann ein Testlauf initiiert werden. Daraus ergibt sich das in Figur 2 gezeigte Zeitfenster, innerhalb dessen der Benutzer das Umrüsten auch an anderen Maschinenteilen, wie etwa dem Füller oder dem Ofen, durchführen kann. Innerhalb dieses Zeitfensters sollte der Umrüstvorgang abgeschlossen sein, damit spätestens bei Ablaufen des Uhrstandes eine entsprechende Bestätigung eingegeben werden kann. Optional wäre es auch möglich, noch eine weitere Eskalationsstufe einzuführen, beispielsweise wenn die Startzeit überschritten wurde. In diesem Falle könnten für eine vorgegebene Zeit sowohl die Blasformen, als auch die Fülleinrichtung und die Kurzzeiterwärmungseinrichtung für eine bestimmte Zeit heiß gehalten werden. Wenn nach Ablaufen dieser Zeitspanne nicht bestätigt wird, dass das Rüsten vollständig erledigt wird, kann es zu einem Abbruch der Inbetriebnahme kommen. Daneben ist bevorzugt jedoch stets ein Abbruch der Inbetriebnahme durch den Benutzer möglich.

Auch kann an den Benutzer eine Aufforderung bzw. Warnung ausgegeben werden, dass diese nunmehr die Beendigung der Umrüstung zu bestätigen hat.

Allgemein kann der Start des Testlaufes beginnen, wenn alle automatischen Vorgänge abgeschlossen und die Erledigung der restlichen Rüstaufgaben von dem Bediener bestätigt wurde. Dies wird bevorzugt abgefragt.

Fehlt die Bestätigung von dem Benutzer, läuft - wie oben erwähnt - eine Wartezeit an, d.h. die Uhr läuft, bis eine maximal mögliche Zeit erreicht ist. Diese kann beispielsweise durch die Kurzzeiterhitzung und die Qualitätsanforderungen auf 10 Minuten begrenzt sein. Innerhalb von beispielsweise 5 Minuten kann die Bestätigung durch den Benutzer noch erfolgen und der Testlauf kann dann immer noch beginnen. Nach dieser Zeit wird der komplette Vorgang abgebrochen und muss neu gestartet werden. Das Produkt ist dann jedoch verloren. Alternativ kann auch ein Reworktank vorgesehen werden, in den das Produkt umgeleitet wird. Dadurch wäre es möglich, das Produkt weiter zu verwenden.

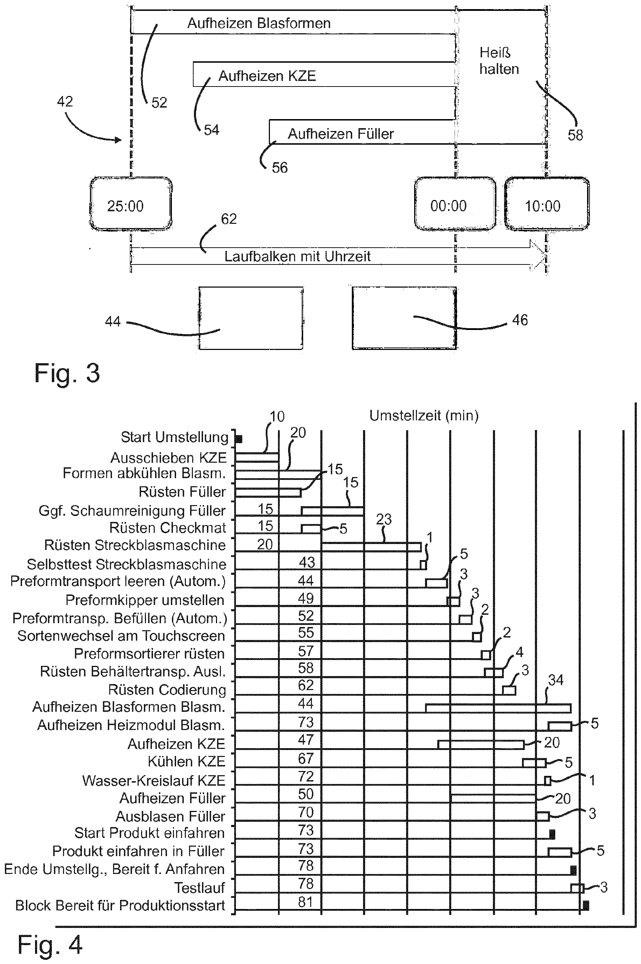

Figur 3 zeigt eine mögliche visuelle Darstellung der ablaufenden Zeiten. Hier kann beispielsweise über Balken 52, 54 und 56 die Ablaufzeit bzw. die Erwärmungszeit für die Blasformen, die Kurzzeiterhitzungseinrichtung und die Füllereinrichtung dargestellt werden. Das Element 58 zeigt diejenige Zeit an, in der die genannten Einrichtungen warm gehalten werden.

Das Bezugszeichen 62 kennzeichnet einen Laufbalken, in dem eine Uhrzeit angegeben werden kann. Daneben können auch einzelne bestimmte Zeiten angegeben werden, wie etwa der Beginn der Erwärmung bei 25 Minuten, der Zeitpunkt, an dem alle Erwärmungsvorgänge abgeschlossen sind (hier bei 0 Minuten) und auch ein Zeitpunkt, bis zu dem der Benutzer noch die Durchführung der Rüstvorgänge bestätigen kann (hier 10 Minuten). Weiterhin können - wie oben erwähnt - Betätigungselemente 44 und 46 vorgesehen sein, über die der Benutzer etwa einen Umrüstvorgang bestätigen kann oder auch manuell die Erwärmung abbrechen kann. Bei diesen Betätigungselementen kann es sich jedoch auch um zu berührende Bereiche, etwa eines Touchscreens, handeln. Auf diese Weise wird eine reproduzierbare Umstellzeit insbesondere an Blockmaschinen durch einen stärker automatisierten Ablauf erreicht. Daneben kann auch eine Energieeinsparung erreicht werden, da keine Komponente unnötig warten bzw. unnötig heizen muss.

Figur 4 zeigt ein detailliertes Ablaufprogramm bzw. einen Ablauf einer Produktumstellung, welche bevorzugt auch durch einen Bediener durchgeführt werden kann.

Man erkennt, dass hier einige Vorgänge bzw. Abläufe simultan durchgeführt werden, wie etwa ein Abkühlenlassen der auszuwechselnden Blasformen und ein Ausschieben der Kurzzeiterhitzungseinrichtung. Während des Abkühlens der Blasformen kann durch den Benutzer bereits eine Umrüstung der Fülleinrichtung vorgenommen werden und gegebenenfalls eine sich daran anschließende Schaumreinigung des Füllers.

Weiterhin kann während der Abkühlung der Blasformen eine Rüstung der Inspektionseinrichtung (in der Figur als Checkmat bezeichnet) durchgeführt werden. Nach dem Abkühlen der Blasform kann die Streckblasmaschine umgerüstet werden, was in dem hier gezeigten Beispiel 23 Minuten benötigt. An dieses Umrüsten kann sich ein Selbsttest der Streckblasmaschine anschließen, für den 1 Minute benötigt wird. Weitere Tätigkeiten können ebenfalls im Anschluss an dieses Rüsten durchgeführt werden, etwa ein Leeren des Kunststoffvorformlingstransportes, eine Umstellung eines Kippers für die Kunststoffvorformlinge und eine Neubefüllung mit Kunststoffvorformlingen.

Daneben kann auch ein Sortenwechsel an dem Touchscreen vorgegeben werden und ein neues Rüsten des Sortierers für die Kunststoffvorformlinge und auch ein Rüsten für den Behältertransport an der Ausleitung. Schließlich kann noch ein Rüsten der Codierung vorgenommen werden. Für diese jeweiligen Vorgänge wurden hier entsprechende Zeiten zwischen 2 und 5 Minuten veranschlagt. Nach dem Durchführen des Rüstens der Streckblasmaschine kann wiederum ein Aufheizen der Blasformen erfolgen.

Dieses benötigt hier 34 Minuten. Schon bereits während dieses Heizvorganges bzw. des Endes dieses Heizvorganges kann auch der Ofen für die Blasformmaschine erwärmt werden (dies nimmt hier 5 Minuten in Anspruch) und auch die Aufheizung und auch ein Kühlen der Kurzzeiterhitzungseinrichtung können in diesem Zeitablauf stattfinden. Daneben kann auch ein Wasserkreislauf für die Kurzzeiterhitzungseinrichtung in Betrieb genommen werden. Weiterhin kann auch während der Erwärmung der Blasformen eine Erwärmung der Fülleinrichtung vorgenommen werden, welche hier 20 Minuten in Anspruch nimmt.

Im Anschluss daran kann ein Ausblasen der Fülleinrichtung durchgeführt werden und dann kann damit begonnen werden, das Produkt einzufahren. Nachdem auch das Produkt in den Füller eingefahren wurde, ist die Umstellung beendet und es kann mit einem Testlauf begonnen werden (hier nach 78 Minuten). Nach insgesamt 81 Minuten ist der gesamte Block bereit für den Produktionsstart. Dabei wird die gesamte Umstellzeit von hier 81 Minuten im Wesentlichen bestimmt durch die Zeitdauern, die benötigt werden für das Abkühlen der Blasformen, für das Rüsten der Streckblasmaschine (24 Minuten), für das Aufheizen der Blasformen (24 Minuten) und den Testlauf von 3 Minuten. Die anderen Vorgänge können - wie in Figur 4 gezeigt - zwischenzeitlich durchgeführt werden, ohne einen zusätzlichen Zeitverlust mit sich zu bringen.

### Bezugszeichenliste

- W1, W2, W3: charakteristische Werte
- 1: Vorrichtung
- 2: Umformungseinrichtung
- 4: Fülleinrichtung
- 6: Kurzzeiterhitzungseinrichtung (KZE)
- 8: Erwärmungseinrichtung/Preform-Ofen
- 10: Getränkebehältnisse/Kunststoffbehältnisse
- 12: Verschließer
- 20: Zeitmanagementsystem
- 22: Vorrat an Kunststoffvorformlingen
- 32: Transporteinrichtung
- 36: Transportstrecke/Kühleinrichtung
- 42: Bildausgabeeinrichtung
- 44, 46: Eingabeelement
- 52, 54, 56: Balken
- 58: Element
- 62: Laufbalken

## Patentansprüche

1. Verfahren zum Durchführen eines Umstellvorgangs bei einer Vorrichtung (1) zum Herstellen von Getränkebehältnissen (10), wobei diese Vorrichtung (1) in einem Arbeitsbetrieb Kunststoffbehältnisse mittels einer Umformungseinrichtung (2) aus Kunststoffvorformlingen erzeugt und diese erzeugten Kunststoffbehältnisse (10) zu einer Fülleinrichtung (4) transportiert werden und die Behältnisse mit einer Flüssigkeit und insbesondere mit einem Getränk befüllt werden, wobei die Flüssigkeit mit einer Temperatur in das Behältnis (10) eingefüllt wird, die über 50°C liegt,
**dadurch gekennzeichnet, dass**
wenigstens die Umformungseinrichtung (2) und die Fülleinrichtung (4) wenigstens zeitweise in Datenkommunikation stehen und zur Durchführung des Umstellungsvorgangs von wenigstens der Umformungseinrichtung (2) oder der Fülleinrichtung (4) ein Wert (W1) ausgegeben und/oder verwendet wird, der für einen Umstellungsstatus dieser Umformungseinrichtung (2) oder dieser Fülleinrichtung (4) charakteristisch ist.

2. Verfahren nach Anspruch 1,
**dadurch gekennzeichnet, dass**
im Rahmen des Umstellungsvorgangs auch wenigstens an der Umformungseinrichtung und/oder der Fülleinrichtung (4) ein Umrüstvorgang durchgeführt wird, bei dem wenigstens ein Element dieser Umformungseinrichtung (2) und/oder der Fülleinrichtung (4) gewechselt wird.

3. Verfahren nach Anspruch 1,
**dadurch gekennzeichnet, dass**
an der Umformungseinrichtung (2) ein Umrüstvorgang von einem ersten Satz an Blasformen auf einen zweiten Satz an Blasformen durchgeführt wird und wenigstens ein für diesen Umrüstvorgang charakteristischer Wert für den Umstellvorgang verwendet wird.

4. Verfahren nach wenigstens einem der vorangegangenen Ansprüche,
**dadurch gekennzeichnet, dass**
für den Umstellvorgang wenigstens ein Element der Umformungseinrichtung und/oder wenigstens ein Element der Fülleinrichtung erwärmt wird.

5. Verfahren nach Anspruch 1,
**dadurch gekennzeichnet, dass**
eine Kurzzeiterhitzung der Flüssigkeit vorgenommen wird.

6. Verfahren nach wenigstens einem der vorangegangenen Ansprüche,
**dadurch gekennzeichnet, dass**
der für den Umstellungsstatus der Umformungseinrichtung (2) charakteristische Wert ein Zeitwert und/oder ein für eine Temperatur wenigstens eines Elements der Umformungseinrichtung (2) oder der Fülleinrichtung (4) charakteristischer Wert ist.

7. Verfahren nach wenigstens einem der vorangegangenen Ansprüche,
**dadurch gekennzeichnet, dass**
im Rahmen des Umstellungsvorgangs wenigstens ein Element der Umformungseinrichtung (2) und wenigstens ein Element der Fülleinrichtung (4) erwärmt wird, wobei die Erwärmung des Elements der Umformungseinrichtung (2) zu einem anderen und insbesondere einem früheren Zeitpunkt begonnen wird.

8. Verfahren nach Anspruch 5,
**dadurch gekennzeichnet, dass**
der Zeitpunkt für den Beginn der Erwärmung des Elements der Fülleinrichtung (4) in Abhängigkeit von einem Zeitpunkt für den Beginn der Erwärmung des Elements der Umformungseinrichtung (2) bestimmt wird.

9. Vorrichtung zum Herstellen von Getränkebehältnissen (10), mit einer Umformungseinrichtung (2), welche Kunststoffvorformlinge zu Kunststoffbehältnissen umformt, mit einer Fülleinrichtung (4), welche die von der Umformungseinrichtung (2) hergestellten Kunststoffbehältnisse (10) mit einer Flüssigkeit und insbesondere einem Getränk befüllt, wobei die Fülleinrichtung (4) derart ausgestaltet ist, dass sie die Flüssigkeit mit einer Temperatur in das Behältnis (10) einfüllt, die über 50°C liegt und mit einer Kurzeiterhitzungseinrichtung (6), welche zum Erhitzen der in die Behältnisse einzufüllenden Flüssigkeit geeignet und bestimmt ist,
**dadurch gekennzeichnet, dass**
die Vorrichtung (1) ein Zeitmanagementsystem (20) aufweist, welches einen Produktionsbeginn der Vorrichtung (1) unter Berücksichtigung von Erwärmungszeiten der Umformungseinrichtung und/oder der Fülleinrichtung steuert.

10. Vorrichtung (1) nach Anspruch 9,
**dadurch gekennzeichnet, dass**
dem Zeitmanagementsystem (20) ein für einen Umrüstvorgang charakteristischer Wert zuführbar ist.

11. Vorrichtung (1) nach wenigstens einem der vorangegangenen Ansprüche,
**dadurch gekennzeichnet, dass**
das Zeitmanagementsystem (20) dazu geeignet und bestimmt ist, einen Erwärmungsvorgang wenigstens eines Elementes der Vorrichtung (1) automatisch einzuleiten.

12. Vorrichtung (1) nach wenigstens einem der vorangegangenen Ansprüche,
**dadurch gekennzeichnet, dass**
die Vorrichtung (1) eine Anzeigeeinrichtung (42) aufweist, welche zur Ausgabe von Daten geeignet und bestimmt ist, welche für eine Erwärmung wenigstens eines Elements der Vorrichtung charakteristisch sind.

## Claims

1. Method for carrying out a changeover process in a system (1) for producing beverage containers (10), wherein this system (1) in a working operation produces plastic containers from plastic parisons by means of a transforming device (2) and these produced containers (10) are transported to a filling device (4) and the containers are filled with a liquid and in particular a beverage, wherein the liquid is introduced into the container (10) at a temperature of over 50°C,
**characterised in that**
at least the transforming device (2) and the filling device (4) are at least intermittently in data communication and for carrying out the changeover process by at least the transforming device (2) or the filling device (4) a value (W1) is output and/or used which is characteristic for a changeover status of this transforming device (2) or this filling device (4).

2. Method according to claim 1,
**characterised in that**
in the context of the changeover process a conversion process is also carried out at least on the transforming device and/or the filling device (4), wherein at least one element of this transforming device (2) and/or the filling device (4) is changed.

3. Method according to claim 1,
**characterised in that**
on the transforming device (2) a conversion process from a first set of blow moulds to a second set of blow moulds is carried out and at least one value which is characteristic for this conversion process is used for the changeover process.

4. Method according to at least one of the preceding claims,
**characterised in that**
for the changeover process at least one element of the transforming device and/or at least one element of the filling device is heated.

5. Method according to claim 1,
**characterised in that**
flash heating of the liquid is carried out.

6. Method according to at least one of the preceding claims,
**characterised in that**
the value which is characteristic for the changeover status of the transforming device (2) is a time value and/or a value which is characteristic for a temperature of at least one element of the transforming device (2) or of the filling device (4).

7. Method according to at least one of the preceding claims,
**characterised in that**
in the context of the changeover process at least one element of the transforming device (2) and at least one element of the filling device (4) is heated, wherein the heating of the element of the transforming device (2) is started at a different time and in particular at an earlier time.

8. Method according to claim 5,
**characterised in that**
the time for the start of the heating of the element of the filling device (4) is determined as a function of a time for the start of heating of the element of the transforming device (2).

9. System for producing beverage containers (10), with a transforming device (2) which transforms plastic parisons into plastic containers, with a filling device (4) which fills the plastic containers (10) produced by the transforming device (2) with a liquid and in particular with a beverage, wherein the filling device (4) is configured in such a way that it introduces the liquid into the container (10) at a temperature above 50° C, and with a flash heater (6) which is suitable and intended for heating the liquid to be introduced into the containers,
**characterised in that**
the system (1) has a time management system (20) which controls the start of production of the system (1) taking into account heating times of the transforming device and/or the filling device.

10. System (1) according to claim 9,
**characterised in that**
a value which is characteristic for a conversion process can be supplied to the time management system (20).

11. System (1) according to at least one of the preceding claims,
**characterised in that**
the time management system (20) is suitable and intended for automatically initiating a heating operation of at least one element of the system (1).

12. System (1) according to at least one of the preceding claims,
**characterised in that**
the system (1) has a display device (42) which is suitable and intended for output of data which are characteristic for heating of at least one element of the system.

## Revendications

1. Procédé de mise en œuvre d'une procédure de renversement de marche pour un dispositif (1) de fabrication de récipients à boisson (10), dans lequel ce dispositif (1) produit en mode travail des récipients en matière plastique au moyen d'un dispositif de façonnage (2) à partir de préformes en matière plastique et ces récipients en matière plastique (10) produits sont transportés vers un dispositif de remplissage (4) et les récipients sont remplis d'un liquide et en particulier d'une boisson, dans lequel le liquide est versé dans le récipient (10) à une température qui est supérieure à 50 °C,
**caractérisé en ce que**
au moins le dispositif de façonnage (2) et le dispositif de remplissage (4) sont au moins par intermittence en communication de données et, pour la mise en oeuvre de la procédure de renversement de marche d'au moins le dispositif de façonnage (2) ou le dispositif de remplissage (4), une valeur (W1) est délivrée et/ou utilisée, qui est caractéristique d'un état de renversement de marche de ce dispositif de façonnage (2) ou de ce dispositif de remplissage (4).

2. Procédé selon la revendication 1,
**caractérisé en ce que**
une procédure d'adaptation est mise en oeuvre dans le cadre de la procédure de renversement de marche également au moins sur le dispositif de façonnage et/ou le dispositif de remplissage (4), où au moins un élément de ce dispositif de façonnage (2) et/ou du dispositif de remplissage (4) est échangé.

3. Procédé selon la revendication 1,
**caractérisé en ce que**
une procédure d'adaptation d'un premier groupe de moules de soufflage à un deuxième groupe de moules de soufflage est mise en œuvre sur le dispositif de façonnage (2) et au moins une valeur caractéristique de cette procédure d'adaptation est utilisée pour la procédure de renversement de marche.

4. Procédé selon au moins l'une des revendications précédentes,
**caractérisé en ce que**
au moins un élément du dispositif de façonnage et/ou au moins un élément du dispositif de remplissage est réchauffé pour la procédure de renversement de marche.

5. Procédé selon la revendication 1,
**caractérisé en ce que**
un chauffage de courte durée du liquide est réalisé.

6. Procédé selon au moins l'une des revendications précédentes,
**caractérisé en ce que**
la valeur caractéristique du statut de renversement de marche du dispositif de façonnage (2) est une valeur de temps et/ou une valeur caractéristique d'une température d'au moins un élément du dispositif de façonnage (2) ou du dispositif de remplissage (4).

7. Procédé selon au moins l'une des revendications précédentes,
**caractérisé en ce que**
dans le cadre de la procédure de renversement de marche, au moins un élément du dispositif de façonnage (2) et au moins un élément du dispositif de remplissage (4) est réchauffé, dans lequel le réchauffage de l'élément du dispositif de façonnage (2) est commencé à un autre moment, et en particulier antérieur.

8. Procédé selon la revendication 5,
**caractérisé en ce que**
le moment pour le début du réchauffage de l'élément du dispositif de remplissage (4) est déterminé en fonction d'un moment pour le début du réchauffage de l'élément du dispositif de façonnage (2).

9. Dispositif de fabrication de récipients à boisson (10), avec un dispositif de façonnage (2), lequel transforme des préformes en matière plastique en récipients en matière plastique, avec un dispositif de remplissage (4), lequel remplit les récipients en matière plastique (10) fabriqués par le dispositif de façonnage (2) d'un liquide et en particulier d'une boisson, dans lequel le dispositif de remplissage (4) est réalisé de telle sorte qu'il verse le liquide dans le récipient (10) à une température qui est supérieure à 50 C, et avec un dispositif de chauffage de courte durée (6), lequel est adapté et destiné à chauffer le liquide à verser dans les récipients,
**caractérisé en ce que**
le dispositif (1) présente un système de gestion de temps (20), lequel commande un début de production du dispositif (1) avec prise en compte de temps de réchauffage du dispositif de façonnage et/ou du dispositif de remplissage.

10. Dispositif (1) selon la revendication 9,
**caractérisé en ce que**
une valeur caractéristique d'une procédure d'adaptation peut être amenée au système de gestion de temps (20).

11. Dispositif (1) selon au moins l'une des revendications précédentes,
**caractérisé en ce que**
le système de gestion de temps (20) est adapté et destiné à déclencher automatiquement une procédure de réchauffage d'au moins un élément du dispositif (1).

12. Dispositif (1) selon au moins l'une des revendications précédentes,
**caractérisé en ce que**
le dispositif (1) présente un dispositif d'indication (42), lequel est adapté et destiné à délivrer des données, lesquelles sont caractéristiques d'un réchauffage d'au moins un élément du dispositif.
